# EUROPEAN PATENT APPLICATION

(11) **EP 4 769 962 A1**
(43) Date of publication of application: **01.07.2026**
(21) Application number: 25223236.8
(22) Date of filing: 15.12.2025
(51) Int. Cl.: H04B 3/54, H02J 1/102, H02J 3/38, H02J 13/13, H02J 13/18

(54) **SELF-NETWORKING METHOD FOR MODULE CONTROLLER, AND POWER CONVERTER**

(30) Priority: 31.12.2024 CN 202411997697
(71) Applicant: Sungrow (Shanghai) Co., Ltd., Shanghai 201107 (CN)
(72) Inventor: YANG, Hui, Shanghai (CN); ZHANG, Gan, Shanghai (CN); YAO, Keliang, Shanghai (CN); HE, Yi, Shanghai (CN); CHEN, Shangwen, Shanghai (CN)
(74) Representative: Zacco Norway AS

(57) **Abstract**

The present disclosure relates to the technical field of renewable energy, and provides a self-networking method for a module controller, and a related apparatus, to improve the self-networking efficiency for the module controller. The method includes: controlling a power converter to search for multiple initial module controllers and obtaining a PLC link quality value between each initial module controller and the power converter, to obtain multiple PLC link quality values; filtering the multiple initial module controllers based on the multiple PLC link quality values and a minimum quality requirement threshold to obtain multiple candidate module controllers; and networking the multiple candidate module controllers to obtain multiple networked module controllers.

## Description

### FIELD

The present disclosure relates to the technical field of renewable energy, and in particular to a self-networking method for a module controller, a module controller, a power converter, a power system, and a storage medium.

### BACKGROUND

As global reliance on renewable energy gradually increases, a renewable energy power station, as an important component of clean energy, is becoming increasingly prominent in power supply systems. To better control the renewable energy power station (such as a photovoltaic power station), a power converter and a module controller are typically used to manage a power generation module. The power converter determines a position of each module controller to facilitate command control and status positioning for each module controller during later operations. Therefore, the module controller is to be networked.

During a networking process, an entire logical topology is determined by using an automation software identification strategy in the conventional solutions, and a temporary network is established between the power converter and the module controller, resulting in low networking efficiency.

### SUMMARY

A self-networking method for a module controller, a module controller, a power converter, a power system, and a storage medium are provided according to the present disclosure. Multiple power line carrier (PLC) link quality values fed back by multiple initial module controllers are obtained by the power converter. The multiple initial module controllers are filtered based on the multiple PLC link quality values and a minimum quality requirement threshold to obtain multiple candidate module controllers. The multiple candidate module controllers are networked to obtain multiple networked module controllers, solving the problem of establishing a temporary network during the self-networking process for the module controller, and improving the self-networking efficiency for the module controller.

In a first aspect, a self-networking method for a module controller is provided according to an embodiment of the present disclosure. The method includes: controlling a power converter to search for multiple initial module controllers and obtaining a PLC link quality value between each of the multiple initial module controllers and the power converter, to obtain multiple PLC link quality values; filtering the multiple initial module controllers based on the multiple PLC link quality values and a minimum quality requirement threshold to obtain multiple candidate module controllers, where each of the multiple candidate module controllers is used to indicate an initial module controller having an actual physical connection with the power converter; and networking the multiple candidate module controllers to obtain multiple networked module controllers.

In a second aspect, a module controller is provided according to an embodiment of the present disclosure. The module controller includes a controlling and obtaining module, a filtering module, and a networking module. The controlling and obtaining module is configured to control a power converter to search for multiple initial module controllers and obtain a PLC link quality value between each of the multiple initial module controllers and the power converter, to obtain multiple PLC link quality values. The filtering module is configured to filter the multiple initial module controllers based on the multiple PLC link quality values and a minimum quality requirement threshold to obtain multiple candidate module controllers, where each of the multiple candidate module controllers is used to indicate an initial module controller having an actual physical connection with the power converter. The networking module is configured to network the multiple candidate module controllers to obtain multiple networked module controllers.

In a third aspect, a power converter is provided according to an embodiment of the present disclosure. The power converter includes a memory, a controller, and a direct current conversion unit. The direct current conversion unit is configured to convert a direct current power into an alternating current power. The memory is configured to store an instruction. The memory and the controller are connected to each other via circuitry. The controller is configured to: search for multiple initial module controllers and obtain a PLC link quality value between each of the multiple initial module controllers and the power converter, to obtain multiple PLC link quality values; filter the multiple initial module controllers based on the multiple PLC link quality values and a minimum quality requirement threshold to obtain multiple candidate module controllers, where each of the multiple candidate module controllers is used to indicate an initial module controller having an actual physical connection with the power converter; and network the multiple candidate module controllers to obtain multiple networked module controllers.

### BRIEF DESCRIPTION OF THE DRAWINGS

FIG. 1 is a schematic flowchart showing a self-networking method for a module controller according to an embodiment of the present disclosure;
FIG. 2 is a schematic diagram showing composition of a photovoltaic power generation system according to an embodiment of the present disclosure;
FIG. 3 is a schematic diagram showing composition of a photovoltaic string according to an embodiment of the present disclosure;
FIG. 4 is a schematic flowchart showing a self-networking method for a module controller according to another embodiment of the present disclosure;
FIG. 5 is a schematic flowchart showing a self-networking method for a module controller according to another embodiment of the present disclosure;
FIG. 6A is a schematic flowchart showing a self-networking method for a module controller according to another embodiment of the present disclosure;
FIG. 6B is a schematic diagram showing a connection of a module controller according to an embodiment of the present disclosure;
FIG. 6C is a schematic diagram showing a connection of multiple module controllers according to an embodiment of the present disclosure;
FIG. 7 is a schematic diagram of a module controller according to an embodiment of the present disclosure; and
FIG. 8 is a schematic diagram of a power converter according to an embodiment of the present disclosure.

### DETAILED DESCRIPTION

A self-networking method for a module controller, a module controller, a power converter, a power system, and a storage medium are provided according to the present disclosure, to solve the problem of establishing a temporary network during the self-networking process for the module controller, and to improve the self-networking efficiency for the module controller.

The terms such as "first", "second", "third", "fourth" and the like (if any) in the description, claims and drawings are only used to distinguish similar objects from each other, rather than describe a particular or chronological order. It should be understood that data used in such manner may be interchanged appropriately, so that the embodiments of the present disclosure may be, for example, implemented in an order other than those illustrated or described herein. Moreover, the terms "include," "comprise", and any other variants thereof are intended to cover the non-exclusive inclusion. For example, a process, a method, a system, a product, or a device that includes a list of steps or units is not necessarily limited to those expressly listed steps or units, but may include other steps or units not expressly listed or inherent in such process, method, product, or device.

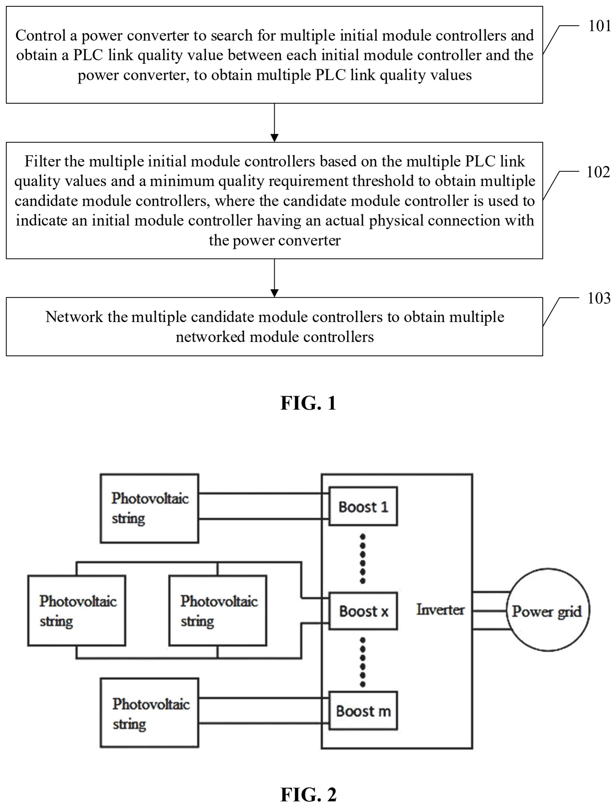

Referring to FIG. 1, FIG. 1 is a flowchart of a self-networking method for a module controller according to an embodiment of the present disclosure, including the following steps 101 to 103.

In 101, a power converter is controlled to search for multiple initial module controllers and a PLC link quality value between each initial module controller and the power converter is obtained, to obtain multiple PLC link quality values.

The initial module controller is a control apparatus connected to a photovoltaic module, configured to control the photovoltaic module, and to achieve power regulation, communication, and safety protection functions for the connected photovoltaic module.

The present disclosure is applicable to the technical field of renewable energy. For ease of understanding, a photovoltaic scenario is taken as an example to describe in the embodiments of the present disclosure and subsequent embodiments.

In an embodiment, the power converter, after being powered on, broadcasts a search command at a preset time interval, and each qualified initial module controller reports a broadcast response message based on the search command in a competition manner through a Carrier Sense Multiple Access with Collision Avoid (CSMA/CA) mechanism. The broadcast response message carries an identification for a module controller and a PLC link quality value between the module controller and the power converter. Power Line Carrier (PLC) is a telecommunications transmission manner that uses high-voltage power lines in a power system for communication. PLC communication includes: transmitting a signal into a transmitting branch of the PLC, modulating the signal into a high-frequency signal of 80kHz-490kHz, transmitting the high-frequency signal into one or two phases of a high-voltage power line through a combination device, transmitting the high-frequency signal through lines to a receiving end, then transmitting the high-frequency signal to a receiving branch of a PLC device through a coupling device of the receiving end, and demodulating the high-frequency signal back into the original signal. Using one phase is referred to as a "phase-to-ground" coupling wiring manner, while using two phases is referred to as a "phase-to-phase" coupling wiring manner. A channel quality from the power converter to the module controller is represented as a downlink PLC link quality value, and a channel quality from the module controller to the power converter is represented as an uplink PLC link quality value. The PLC link quality value reflects the quality of the communication link. A greater PLC link quality value indicates better quality of the communication link. Moreover, communication links with actual physical connections have smaller channel attenuation, smaller channel noise and better link quality compared with communication links without actual physical connections. Therefore, use of the link quality value may determine an apparatus having an actual physical connection with a local apparatus. The power converter may be an inverter or another apparatus with a power conversion function, which is not limited here.

It should be noted that not all module controllers send broadcast response messages. Each module controller determines whether the uplink and downlink PLC link quality values carried in the search command are greater than or equal to a PLC link quality minimum response threshold, feeds back the broadcast response message if the PLC link quality value is greater than or equal to the PLC link quality minimum response threshold, and filters out the search command and makes no response if the PLC link quality value is less than the PLC link quality minimum response threshold.

The execution subject according to the embodiments of the present disclosure may be a module controller, a power converter, or another apparatus with processing capabilities. For ease of description, the power converter is taken as an example in the embodiments of the present disclosure and subsequent embodiments.

It is understandable that in the embodiments of the present disclosure and subsequent embodiments, the applied photovoltaic power generation system is provided with the module controller, and the module controller may be an optimizer or a shutdown device. For ease of description, the optimizer is taken as an example in the embodiments of the present disclosure and subsequent embodiments.

For example, as shown in FIG. 2, the photovoltaic power generation system includes multiple photovoltaic strings and one power converter. The power converter is connected to the power grid. The power converter is connected to an applicable single-phase power grid or three-phase power grid, depending on a model of the power converter. The power converter internally includes m Boost converters, where m is a positive integer greater than or equal to 1. Each Boost converter has an input port, which is a Boost port, also known as a maximum power point tracking (MPPT) port. In the power converter, one Boost port may include multiple PV ports connected in parallel or one Boost port may directly serve as one PV port, that is, one Boost port may be connected to one photovoltaic string, or one Boost port may be connected to multiple photovoltaic strings connected in parallel through a combiner terminal.

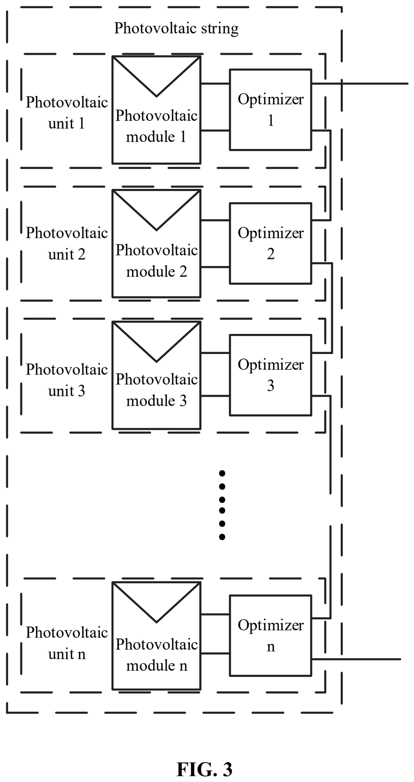

When the photovoltaic power generation system is provided with optimizers, each photovoltaic string includes n photovoltaic units, and each of the photovoltaic units includes a photovoltaic module and an optimizer. The photovoltaic unit includes at least one photovoltaic module connected to an input end of the optimizer. Output ends of all optimizers in the photovoltaic string are connected in series, that is, a positive output terminal of one optimizer is connected to a negative output terminal of a previous optimizer, and a negative output terminal of the optimizer is connected to a positive output terminal of a next optimizer, and the all optimizers are connected in series, for example, the positive output end of the first optimizer(see optimizer 1 in FIG. 3) and the negative output end of the last optimizer(see optimizer n in FIG. 3) in one photovoltaic string are respectively connected to the PV port of the corresponding boost (see boost 1 in FIG. 2) of the power converter. Detailed connection of each photovoltaic string is shown in FIG. 3. The value of n depends on the model of the power converter. For example, when the power converter is a single-phase power converter, n may be set to less than or equal to 25; and when the power converter is a three-phase power converter, n is less than or equal to 35.

It should be noted that the number of photovoltaic units may be different in different photovoltaic strings connected to a same photovoltaic power generation system, the series-parallel configuration may be different for photovoltaic strings connected to different Boost ports, and the power may be different for photovoltaic units

In 102, the multiple initial module controllers are filtered based on the multiple PLC link quality values and a minimum quality requirement threshold to obtain multiple candidate module controllers, where the candidate module controller is used to indicate an initial module controller having an actual physical connection with the power converter.

It should be noted that the obtained multiple PLC link quality values are compared with the minimum quality requirement threshold, and the initial module controllers corresponding to PLC link quality values greater than the minimum quality requirement threshold are determined as candidate module controllers. The PLC link quality value reflects PLC communication quality between each module controller and the power converter. The module controller and the power converter each are configured with corresponding algorithms to calculate the PLC communication quality. The module controller and the power converter may directly measure a strength of a carrier signal on the PLC and display the strength in a specific unit (such as dBm, dB µ V and the like). When the module controller has an actual physical connection with the power converter, the PLC link quality value between them is greater, for example, 70dBm. When the module controller has no actual physical connection with the power converter, they rely only on energy space coupling, and the PLC link quality value between them is lower, for example, 45dBm. The minimum quality requirement threshold may be set to 50dBm.

In 103, the multiple candidate module controllers are networked to obtain multiple networked module controllers.

There are various ways to perform networking, such as using a current gradient disturbance strategy for networking or determining the magnitude of the output current to differentiate between the multiple candidate module controllers for networking.

According to the embodiments of the present disclosure, during the self-networking process, a temporary network is not established for the candidate module controllers, reducing the usage of unicast communication and improving the self-networking efficiency for the module controllers.

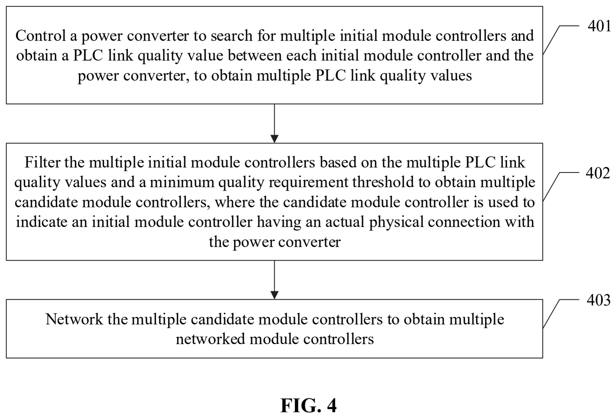

Referring to FIG. 4, FIG. 4 is a flowchart of a self-networking method for a module controller according to another embodiment of the present disclosure, including the following steps 401 to 403.

In 401, a power converter is controlled to search for multiple initial module controllers, and a PLC link quality value between each initial module controller and the power converter is obtained, to obtain multiple PLC link quality values.

In an embodiment, the process of controlling the power converter to search for multiple initial module controllers and obtaining the PLC link quality value between each initial module controller and the power converter, to obtain multiple PLC link quality values includes:
controlling the power converter to broadcast a search command on a public frequency band, where the search command includes a PLC link quality detection command and a PLC link quality minimum response threshold; and
receiving, by the power converter, broadcast response messages fed back by multiple candidate module controllers to obtain the multiple candidate module controllers and multiple corresponding uplink PLC link quality values, where the uplink PLC link quality value refer to a PLC link quality value from an initial module controller to the power converter, and the candidate module controller is an initial module controller whose detected downlink PLC link quality value is greater than or equal to the PLC link quality minimum response threshold, where the downlink PLC link quality value refer to a PLC link quality value from the power converter to the initial module controller.

It should be noted that not all module controllers send broadcast response messages. On receipt of a search command (discovery_command), each module controller determines whether to respond and whether the received downlink PLC link quality value is greater than or equal to the PLC link quality minimum response threshold, filters out the search command and makes no response if the received downlink PLC link quality value is less than the PLC link quality minimum response threshold, and feeds back the broadcast response message if the received downlink PLC link quality value is greater than or equal to the PLC link quality minimum response threshold. Then, the initial module controller starts the CSMA/CA mechanism to report the broadcast response message (response_data) in a competition manner and starts timing. The broadcast response message carries a generated initial identification code (iden_code) and the PLC link quality value. The initial identification code is used to identify a site of the module controller, and the PLC link quality value is used to reflect the link quality between the module controller and the power converter. If it is found that the timer reaches maxseq_time and the module controller has unsuccessfully reported due to unsuccessful competition, the module controller stops reporting and waits for receiving a next search command to report again.

In an embodiment, the process of controlling the power converter to search for multiple initial module controllers and obtaining the PLC link quality value between each initial module controller and the power converter, to obtain multiple PLC link quality values includes:
controlling the power converter to broadcast a search command on a public frequency band, where the search command includes a PLC link quality detection command;
receiving, by the power converter, broadcast response messages fed back by multiple module controllers to obtain multiple uplink PLC link quality values, where the uplink PLC link quality value refers to a PLC link quality value from an initial module controller to the power converter; and
determining the initial module controller whose uplink PLC link quality value is greater than or equal to the PLC link quality minimum response threshold as a candidate module controller to obtain multiple candidate module controllers.

In an embodiment, the process of controlling the power converter to search for multiple initial module controllers and obtaining the PLC link quality value between each initial module controller and the power converter, to obtain multiple PLC link quality values includes:
controlling the power converter to broadcast a search command on a public frequency band, where the search command includes a PLC link quality detection command and a PLC link quality minimum response threshold;
receiving, by the power converter, broadcast response messages fed back by multiple filtered module controllers to obtain the multiple filtered module controllers and multiple uplink PLC link quality values, where the multiple filtered module controllers are part of the multiple initial module controllers whose detected downlink PLC link quality values each are greater than or equal to the PLC link quality minimum response threshold, the multiple uplink PLC link quality values refer to PLC link quality values from the multiple initial module controllers to the power converter, and the downlink PLC link quality values refer to PLC link quality values from the power converter to the multiple initial module controllers; and
determining part of the filtered module controllers whose uplink PLC link quality values each are greater than or equal to the PLC link quality minimum response threshold as multiple candidate module controllers.

In an embodiment, each time the power converter broadcasts a search command, the search command carries a query sequence number (seq_num), a reporting time limit (maxseq_time), and an identification code list (conf_list) for the previous search. The module controller logically determines whether to report its own information based on the three types of information (seq_num, maxseq_time, and conf_list). The identification code list is empty in the search command for the first search.

In the embodiment of the present disclosure and subsequent embodiments, the PLC link quality value is in terms of the module controllers that have successfully reported. For other module controllers that have unsuccessfully reported, they may report in a next round of search command in a completion manner through the CSMA/CA mechanism.

For example, after completing a first round of search command, the power converter, based on the information reported by the initial module controllers, keeps the query sequence number unchanged, repackages and sends the search command (discovery_command), carrying the identification code list (code_list) composed of the initial identification codes (iden_code) of all module controllers that have successfully reported in the previous round. The process gradually converges, ultimately achieving a balance between search time and efficiency, thereby solving the problem of incomplete search and long search time for the power converter.

In 402, the multiple initial module controllers are filtered based on the multiple PLC link quality values and a minimum quality requirement threshold to obtain multiple candidate module controllers, where the candidate module controller indicates an initial module controller having an actual physical connection with the power converter.

It should be noted that the obtained multiple PLC link quality values are compared with the minimum quality requirement threshold, and part of the initial module controllers corresponding to PLC link quality values greater than or equal to the minimum quality requirement threshold are determined as candidate module controllers. The PLC link quality value reflects PLC communication quality between each module controller and the power converter. The module controller and the power converter each are configured with corresponding algorithms to calculate the PLC communication quality.

The module controller and the power converter may directly measure a strength of a carrier signal on the PLC and display the strength in a specific unit (such as dBm, dB µ V and the like). When the module controller has an actual physical connection with the power converter, the PLC link quality value between them is greater, for example, 70dBm. When the module controller has no actual physical connection with the power converter, they rely only on energy space coupling, and the PLC link quality value between them is lower, for example, 45dBm. The minimum quality requirement threshold may be set to 50dBm.

In 403, the multiple candidate module controllers are networked to obtain multiple networked module controllers.

In an embodiment, for a scenario of first self-networking, when the power converter meets a first current identification strategy condition, the multiple candidate module controllers are activated by the power converter and the power converter is controlled to operate in a grid-connected mode, where the first current identification strategy condition is that the power converter does not operate in the grid-connected mode. After the power converter tracks a maximum power point, in response to an output current of a candidate module controller among the multiple candidate module controllers being less than a preset minimum grid-connected current threshold, the candidate module controller with the output current less than the minimum grid-connected current threshold is filtered out to obtain multiple filtered module controllers. The multiple filtered module controllers are networked to obtain the multiple networked module controllers.

For example, if the candidate module controller has an actual physical connection with the power converter, the output current of the candidate module controller is generally greater than 0.5A. If an output current of a candidate module controller is 0.1A, which is less than 0.5A, it indicates that the candidate module controller has no connection with the power converter, and the candidate module controller is filtered out.

It should be noted that the multiple candidate module controllers are filtered, and a candidate module controller among the multiple candidate module controllers that has no actual physical connection with the power converter is filtered out, to obtain multiple candidate module controllers that have actual physical connection with the power converter, thereby avoiding inaccurate filtering caused by relying only on the PLC link quality value, improving the accuracy of the candidate module controllers, and providing favorable conditions for self-networking.

In an embodiment, for a scenario that is not the first self-networking, the method further includes: filtering out, in response to the power converter meeting a second current identification strategy condition, a candidate module controller with an output current less than the minimum grid-connected current threshold to obtain multiple filtered module controllers, where the second current identification strategy condition is that an additional module controller is added into the multiple candidate module controllers, or the power converter is operating in a grid-connected mode; and networking the multiple filtered module controllers to obtain the multiple networked module controllers.

In the embodiments of the present disclosure, during the self-networking process for the multiple candidate module controllers, an initial logical topology is established, so that the communication of the candidate module controllers can be achieved without establishing a temporary network, avoiding the large amount of unicast communication for the temporary network and improving the self-networking efficiency.

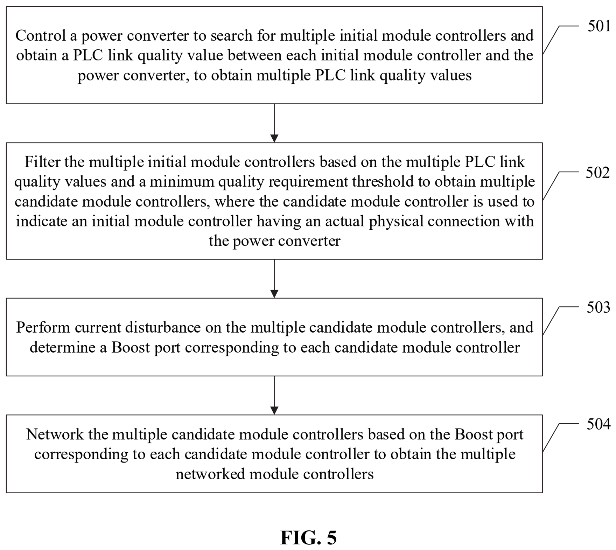

Referring to FIG. 5, FIG. 5 is a flowchart of a self-networking method for a module controller according to another embodiment of the present disclosure, including the following steps 501 to 504.

In 501, a power converter is controlled to search for multiple initial module controllers and a PLC link quality value between each initial module controller and the power converter is obtained, to obtain multiple PLC link quality values.

In 502, the multiple initial module controllers are filtered based on the multiple PLC link quality values and a minimum quality requirement threshold to obtain multiple candidate module controllers, where the candidate module controller indicates an initial module controller having an actual physical connection with the power converter.

Steps 501 to 502 are similar to steps 401 to 402, and details are not repeated here.

In 503, current disturbance is performed on the multiple candidate module controllers, and then the Boost port corresponding to each candidate module controller is determined.

In an embodiment, an output current of each Boost port in the power converter may be fixed through a preset current loop. A gradient tuning instruction is broadcasted to each candidate module controller, where the gradient tuning instruction indicates a Boost port to be raised or lowered at each tuning moment in a tuning moment sequence. A current change of each candidate module controller at each tuning moment is determined. The Boost port corresponding to each candidate module controller is determined based on the current change of each candidate module controller at each tuning moment.

The current disturbance may be either a step-by-step increase or a step-by-step decrease. In the embodiment of the present disclosure and subsequent embodiments, the step-by-step increase is taken as an example for description. For example, an increase gradient may be set to 1A, that is, the current of the Boost port is increased by 1A each time, and then the change of the output current of each candidate module controller is determined to obtain the Boost port corresponding to the candidate module controller. For example, a current of a Boost port is first increased by 1A. If output currents of candidate module controllers 1 and 2 (optimizer 1 and optimizer 2) each are increased by 1 A, the candidate module controllers 1 and 2, whose current increases by 1 A, correspond to the Boost port. Next, a current of a Boost port is increased by 1A. If an output current of a candidate module controller 3 (optimizer 3) is also increased by 1A, the candidate module controller 3 (optimizer 3), whose current increases by 1 A, corresponds to the Boost port. This process continues, and details are not repeated here.

In 504, networking is performed based on the Boost port corresponding to each candidate module controller to obtain the multiple networked module controllers.

In the embodiment, during the self-networking process for the multiple candidate module controllers, the Boost port corresponding to each candidate module controller is determined by using current disturbance, and a logical topology is established based on the Boost port corresponding to each candidate module controller, so that the communication of the candidate module controllers can be achieved without establishing a temporary network, avoiding the large amount of unicast communication for the temporary network and improving the self-networking efficiency.

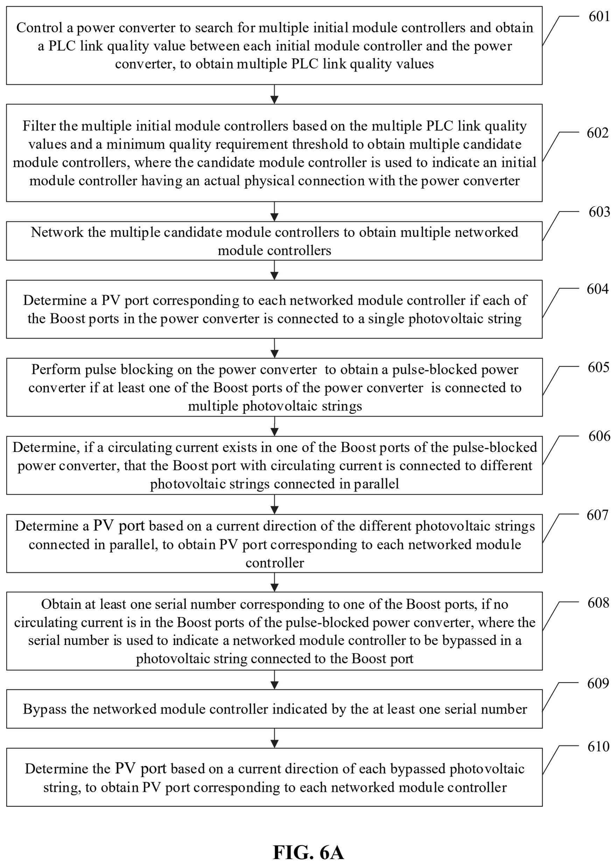

Referring to FIG. 6A, FIG. 6A is a flowchart of a self-networking method for a module controller according to another embodiment of the present disclosure, including the following steps 601 to 610.

In 601, a power converter is controlled to search for multiple initial module controllers and a PLC link quality value between each initial module controller and the power converter is obtained, to obtain multiple PLC link quality values.

In 602, the multiple initial module controllers are filtered based on the multiple PLC link quality values and a minimum quality requirement threshold to obtain multiple candidate module controllers, where the candidate module controller indicates an initial module controller having an actual physical connection with the power converter.

Steps 601 to 602 are similar to steps 401 to 402, and details are not repeated here.

In 603, the multiple candidate module controllers are networked to obtain multiple networked module controllers.

Step 603 is similar to step 103, and details are not repeated here.

In 604, if each of the Boost ports of the power converter is connected to a single photovoltaic string, a PV port corresponding to each networked module controller is determined.

It is understandable that if each of the Boost ports is connected to a single photovoltaic string, all networked module controllers in the single photovoltaic string correspond to the Boost port connected to the photovoltaic string. The photovoltaic string further includes photovoltaic units connected to the candidate module controllers, and each photovoltaic unit includes at least one photovoltaic module.

In 605, if at least one of the Boost ports of the power converter is connected to multiple photovoltaic strings, pulse blocking is performed on the power converter to obtain a pulse-blocked power converter.

It is understandable that if one Boost port is connected to two photovoltaic strings, all networked module controllers in the two photovoltaic strings correspond to the Boost port connected to the two photovoltaic strings, but PV port corresponding to each networked module controller is not determined.

In 606, if a circulating current exists in one of the Boost ports of the pulse-blocked power converter, it is determined that the Boost port with the circulating current is connected to different photovoltaic strings connected in parallel.

It is understandable that after pulse blocking is performed on the power converter, the power converter does not operate. If the circulating current still exists in the power converter in such case, it indicates that the two photovoltaic strings connected to the Boost port have a voltage difference, that is, the number of operating networked module controllers is unbalanced.

In 607, a PV port corresponding to each networked module controller is determined based on a positive current and negative current of different photovoltaic strings connected in parallel.

Among the two photovoltaic strings connected to the Boost port with the circulating current, a PV port corresponding to a networked module controller may be determined by a current direction of the networked module controller. If current of a networked module controller flows into the Boost port, that is, the current is positive, it indicates that the networked module controller is in a photovoltaic string with a high voltage and corresponds to a PV port. If current of a networked module controller flows out of the Boost port, that is, the current is negative, it indicates that the networked module controller is in a photovoltaic string with a low voltage and corresponds to a PV port.

In 608, if no circulating current is in the Boost ports of the pulse-blocked power converter, at least one serial number corresponding to one of the Boost ports is obtained, where the serial number indicates a networked module controller to be bypassed in a photovoltaic string connected to the Boost port.

The serial number indicates the module controller to be bypassed in the photovoltaic string corresponding to the any Boost port. At this time, the number of the module controllers in the two parallel photovoltaic strings connected to the Boost port is balanced, and bypassing is to be performed to change the balance.

In 609, the networked module controller indicated by the at least one serial number is bypassed.

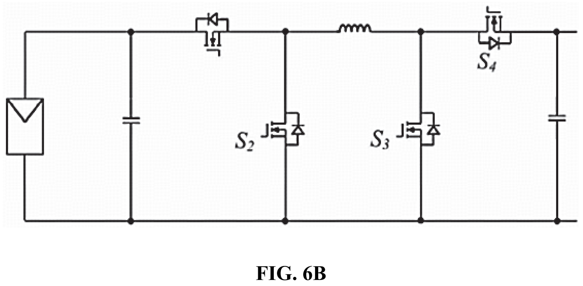

In an embodiment, the networked module controller indicated by the at least one serial number is determined as at least one to-be-bypassed module controller. An activation command is transmitted to an active bypass switching transistor in each to-be-bypassed module controller, to activate the to-be-bypassed module controller to achieve active bypass, thereby creating circulating current. As shown in FIG. 6B, S2 represents the active bypass switching transistor. On receipt of the activation command, S2 is turned on, the module controller is actively bypassed (short-circuited).

In an embodiment, after transmitting an activation command to the active bypass switching transistor in each to-be-bypassed module controller, the method further includes: determining, in response to an unactivated networked module controller being connected between two activated module controllers, that an active bypass switching transistor in the unactivated networked module controller is in a passive bypass state.

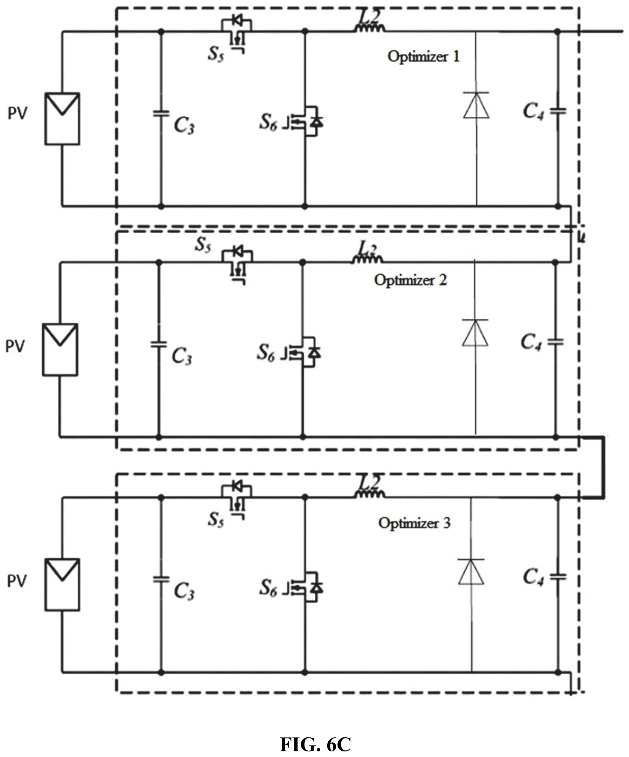

Bypassing includes active bypass and passive bypass. The active bypass refers to actively short-circuiting the networked module controller based on the serial number and the active bypass switching transistor. The passive bypass refers to a target module controller being passively bypassed (such as short-circuited through a diode) due to the activation of surrounding module controllers. As shown in FIG. 6C, the diode is a passive bypass switching transistor. On receipt of the activation command, the optimizer 1 and optimizer 3 are turned on, the diode of the optimizer 2 is passively turned on, and the optimizer 2 is passively bypassed (short-circuited).

In 610, the PV port corresponding to each networked module controller is determined based on a positive current and negative current of each bypassed photovoltaic string.

The PV port corresponding to the networked module controller may be determined by the current direction of the networked module controller. If current of a module controller flows into the Boost port, that is, the current is positive, it indicates that the module controller is in a photovoltaic string with a high voltage. If current of the module controller flows out of the Boost port, that is, the current is negative, it indicates that the module controller is in a photovoltaic string with a low voltage.

It is understood that, in addition to determining based on the direction of the current, step 610 may further be replaced with the following steps (1) and (2).

In step (1), a PV identification command is broadcasted by the power converter, where the PV identification command indicates a Boost index value in which the current is to be changed at each disturbance moment.

The PV identification command is broadcasted by the power converter, where the PV identification command indicates a Boost index value in which the current is to be changed at each disturbance moment, so that each module controller knows a Boost index identifier in which a current is to be changed at each disturbance moment.

In step (2), the current of each Boost port is changed one by one based on the Boost index value, the change of the output current of each networked module controller is determined, and the PV port corresponding to each networked module controller is determined.

For example, when the networked module controller knows that the current of the Boost port has changed, if the current of the networked module controller itself also changes, the photovoltaic string port, that is, the PV port corresponding to the networked module controller is determined based on the direction and the change of the current.

According to the embodiments of the present disclosure, PLC link quality values fed back by multiple initial module controllers are obtained by the power converter. The multiple initial module controllers are filtered based on the PLC link quality values and a minimum quality requirement threshold to obtain multiple candidate module controllers. The multiple candidate module controllers are networked to obtain multiple networked module controllers, and a PV port corresponding to each of the networked module controllers is determined. During the self-networking process, a temporary network is not established for the candidate module controllers, reducing the usage of unicast communication and improving the self-networking efficiency for the module controllers.

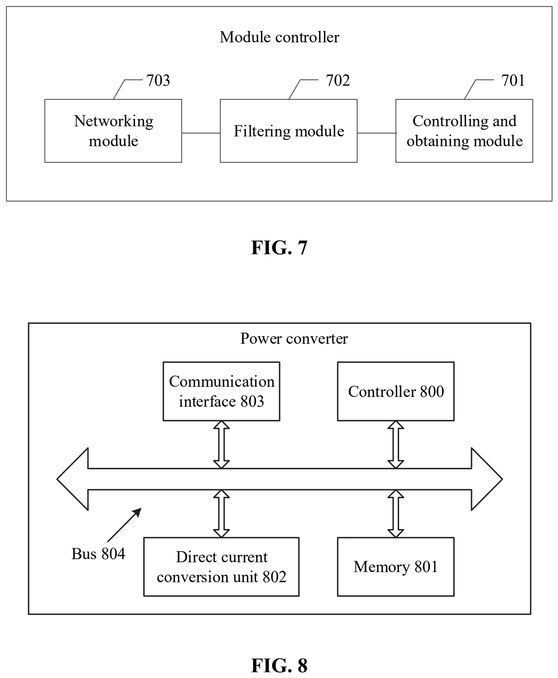

The self-networking method for the module controller according to the embodiments of the present disclosure is described above. A module controller according to the embodiments of the present disclosure is described below. Referring to FIG. 7, FIG. 7 is a schematic diagram of a module controller according to an embodiment of the present disclosure. The module controller includes a controlling and obtaining module 701, a filtering module 702, and a networking module 703.

The controlling and obtaining module 701 is configured to control a power converter to search for multiple initial module controllers and obtain a PLC link quality value between each of the multiple initial module controllers and the power converter, to obtain multiple PLC link quality values.

The filtering module 702 is configured to filter the multiple initial module controllers based on the multiple PLC link quality values and a minimum quality requirement threshold to obtain multiple candidate module controllers, where the candidate module controller is used to indicate an initial module controller having an actual physical connection with the power converter.

The networking module 703 is configured to network the multiple candidate module controllers to obtain multiple networked module controllers.

In an embodiment, the networking module 703 is further configured to: activate, by the power converter in response to the power converter meeting a first current identification strategy condition, the multiple candidate module controllers and control the power converter to operate in a grid-connected mode, where the first current identification strategy condition is that the power converter does not operate in a grid-connected mode; after the power converter tracks a maximum power point, filter out, in response to an output current of a candidate module controller among the multiple candidate module controllers being less than a preset minimum grid-connected current threshold, the candidate module controller with the output current less than the minimum grid-connected current threshold to obtain multiple filtered module controllers; and network the multiple filtered module controllers to obtain multiple networked module controllers.

In an embodiment, the networking module 703 is further configured to: filter out, in response to the power converter meeting a second current identification strategy condition, a candidate module controller with an output current less than the minimum grid-connected current threshold among the multiple candidate module controllers, to obtain multiple filtered module controllers, where the second current identification strategy condition is that an additional module controller is added into the multiple candidate module controllers, or the power converter is operating in a grid-connected mode; and network the multiple filtered module controllers to obtain multiple networked module controllers.

In an embodiment, the networking module 703 is further configured to: perform current disturbance on the multiple candidate module controllers; determine a Boost port corresponding to each of the multiple candidate module controllers subjected to the current disturbance; and network the multiple candidate module controllers based on the Boost port corresponding to each of the multiple candidate module controllers, to obtain the multiple networked module controllers.

In an embodiment, the networking module 703 is further configured to: broadcast, for each of the multiple candidate module controllers, a gradient tuning instruction to the candidate module controller, where the gradient tuning instruction is used to indicate a Boost port to be raised or lowered at each tuning moment in a tuning moment sequence; determine a current change of the candidate module controller at each tuning moment; and determine the Boost port corresponding to the candidate module controller based on the current change of the candidate module controller at each tuning moment.

In an embodiment, the networking module 703 is further configured to: determine, in response to each Boost port in the power converter being connected to a single photovoltaic string, a PV port corresponding to each of the multiple networked module controllers.

In an embodiment, the networking module 703 is further configured to: perform, in response to at least one Boost port of the power converter being connected to multiple photovoltaic strings, pulse blocking on the power converter to obtain a pulse-blocked power converter; determine, in response to a circulating current being in one of the at least one Boost port of the pulse-blocked power converter, that the Boost port with the circulating current is connected to different photovoltaic strings connected in parallel; and determine the PV port based on a current direction of each of the different photovoltaic strings connected in parallel, to obtain a PV port corresponding to each networked module controller, whereas the PV port is corresponding to an output end of photovoltaic string.

In an embodiment, the networking module 703 is further configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypass the networked module controller indicated by the at least one serial number; and determine the PV port based on a current direction of each of the bypassed multiple photovoltaic string, to obtain the PV port corresponding to each networked module controller.

In an embodiment, the networking module 703 is further configured to: obtain, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port; bypass the networked module controller indicated by the at least one serial number; broadcast, by the power converter, a PV identification command, where the PV identification command is used to indicate a Boost index identifier in which a current is to be changed at each disturbance moment; change a current of each of the Boost ports one by one based on the Boost index identifier; determine a change of an output current of each of the multiple networked module controller, and determine the PV port corresponding to the networked module controller based on the change of the output current.

In an embodiment, the networking module 703 is further configured to: determine the networked module controller indicated by the at least one serial number as at least one to-be-bypassed module controller; and transmit an activation command to an active bypass switching transistor in each of the at least one to-be-bypassed module controller, to activate the at least one to-be-bypassed module controller to achieve active bypass.

In an embodiment, the networking module 703 is further configured to: determine, in response to an unactivated networked module controller being connected between two activated module controllers, that an active bypass switching transistor in the unactivated networked module controller is in a passive bypass state.

In an embodiment, the controlling and obtaining module 701 is further configured to: control the power converter to broadcast a search command on a public frequency band, where the search command includes a PLC link quality detection command and a PLC link quality minimum response threshold; and receive, by the power converter, broadcast response messages fed back by multiple candidate module controllers to obtain the multiple candidate module controllers and multiple uplink PLC link quality values, where the multiple uplink PLC link quality values refer to PLC link quality values from the multiple initial module controllers to the power converter; the multiple candidate module controllers are part of the multiple initial module controllers whose detected downlink PLC link quality values each are greater than or equal to the PLC link quality minimum response threshold; and the downlink PLC link quality values refer to PLC link quality values from the power converter to the multiple initial module controllers.

In an embodiment, the controlling and obtaining module 701 is further configured to: control the power converter to broadcast a search command on a public frequency band, where the search command includes a PLC link quality detection command; receive, by the power converter, broadcast response messages fed back by multiple module controllers to obtain multiple uplink PLC link quality values, where the multiple uplink PLC link quality values refer to PLC link quality values from the multiple initial module controllers to the power converter; and determine part of the multiple initial module controllers whose uplink PLC link quality values each are greater than or equal to a PLC link quality minimum response threshold as the multiple candidate module controllers.

In an embodiment, the controlling and obtaining module 701 is further configured to: control the power converter to broadcast a search command on a public frequency band, where the search command includes a PLC link quality detection command and a PLC link quality minimum response threshold; receive, by the power converter, broadcast response messages fed back by multiple filtered module controllers, to obtain the multiple filtered module controllers and multiple uplink PLC link quality values, where the multiple filtered module controllers are part of the multiple initial module controllers whose detected downlink PLC link quality values each are greater than or equal to the PLC link quality minimum response threshold, the multiple uplink PLC link quality values refer to PLC link quality values from the multiple initial module controllers to the power converter, and the downlink PLC link quality values refer to PLC link quality values from the power converter to the multiple initial module controllers; and determine part of the multiple filtered module controllers whose uplink PLC link quality values each are greater than or equal to the PLC link quality minimum response threshold as the multiple candidate module controllers.

Referring to FIG. 8, the power converter includes a controller 800, a memory 801, and a direct current conversion unit 802. The direct current conversion unit 802 is configured to convert a direct current power into an alternating current power. The memory 801 stores a machine-executable instruction that is executable by the controller 800. The controller 800 is configured to perform the following steps:
searching for multiple initial module controllers and obtaining a PLC link quality value between each of the multiple initial module controllers and the power converter, to obtain multiple link quality values;
filtering the multiple initial module controllers based on the multiple PLC link quality values and a minimum quality requirement threshold to obtain multiple candidate module controllers, where each of the candidate module controllers is used to indicate an initial module controller having an actual physical connection with the power converter; and
networking the multiple candidate module controllers to obtain multiple networked module controllers.

In an embodiment, the networking the multiple candidate module controllers to obtain multiple networked module controllers includes:
activating, by the power converter in response to the power converter meeting a first current identification strategy condition, the multiple candidate module controllers and controlling the power converter to operate in a grid-connected mode, where the first current identification strategy condition is that the power converter does not operate in the grid-connected mode;
after the power converter tracks a maximum power point, filtering out, in response to an output current of a candidate module controller among the multiple candidate module controllers being less than a preset minimum grid-connected current threshold, the candidate module controller with the output current less than the minimum grid-connected current threshold to obtain multiple filtered module controllers; and
networking the multiple filtered module controllers to obtain the multiple networked module controllers.

In an embodiment, the networking the multiple candidate module controllers to obtain multiple networked module controllers includes:
filtering out, in response to the power converter meeting a second current identification strategy condition, a candidate module controller with an output current less than a minimum grid-connected current threshold among the multiple candidate module controllers, to obtain multiple filtered module controllers, where the second current identification strategy condition is that an additional module controller is added into the multiple candidate module controllers, or the power converter is operating in a grid-connected mode; and
networking the multiple filtered module controllers to obtain the multiple networked module controllers.

In an embodiment, the networking the multiple candidate module controllers to obtain multiple networked module controllers includes: performing current disturbance on the multiple candidate module controllers; determining a Boost port corresponding to each of the multiple candidate module controllers subjected to the current disturbance; and networking the multiple candidate module controllers based on the Boost port corresponding to each of the multiple candidate module controllers, to obtain the multiple networked module controllers.

In an embodiment, the performing current disturbance on the multiple candidate module controllers, determining a Boost port corresponding to each of the multiple candidate module controllers subjected to the current disturbance includes:
broadcasting, for each of the multiple candidate module controllers, a gradient tuning instruction to the candidate module controller, where the gradient tuning instruction is used to indicate a Boost port to be raised or lowered at each tuning moment in a tuning moment sequence;
determining a current change of the candidate module controller at each tuning moment; and
determining the Boost port corresponding to the candidate module controller based on the current change of the candidate module controller at each tuning moment.

In an embodiment, the networking the multiple candidate module controllers to obtain multiple networked module controllers includes: determining, in response to each Boost port in the power converter being connected to a single photovoltaic string, a PV port corresponding to each of the multiple networked module controllers.

In an embodiment, the networking the multiple candidate module controllers to obtain multiple networked module controllers further includes:
performing, in response to at least one Boost port of the power converter being connected to multiple photovoltaic strings, pulse blocking on the power converter to obtain a pulse-blocked power converter;
determining, in response to a circulating current being in one of the at least one Boost port of the pulse-blocked power converter, that the Boost port with the circulating current is connected to a different photovoltaic strings connected in parallel; and
determining a PV port based on a current direction of each of the different photovoltaic strings connected in parallel, to obtain a PV port corresponding to each of the multiple networked module controllers.

In an embodiment, the networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number; and
determining the PV port based on a current direction of each of the bypassed multiple photovoltaic strings, to obtain the PV port corresponding to each of the multiple networked module controllers.

In an embodiment, the networking the multiple candidate module controllers to obtain multiple networked module controllers includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number;
broadcasting, by the power converter, a PV identification command, where the PV identification command is used to indicate a Boost index identifier in which a current is to be changed at each disturbance moment; and
changing a current of each of the Boost ports one by one based on the Boost index identifier;
determining a change of an output current of each of the multiple networked module controllers; and
determining the PV port corresponding to the networked module controller based on the change of the output current.

In an embodiment, the bypassing the networked module controller indicated by the at least one serial number includes:
determining the networked module controller indicated by the at least one serial number as at least one to-be-bypassed module controller; and
transmitting an activation command to an active bypass switching transistor in each of the at least one to-be-bypassed module controller, to activate the at least one to-be-bypassed module controller to achieve active bypass.

In an embodiment, after transmitting an activation command an active bypass switching transistor in each of the at least one to-be-bypassed module controller, the controller is further configured to: determine, in response to an unactivated networked module controller being connected between two activated module controllers, that an active bypass switching transistor in the unactivated networked module controller is in a passive bypass state.

In an embodiment, the controlling a power converter to search for multiple initial module controllers and obtaining a PLC link quality value between each of the multiple initial module controllers and the power converter, to obtain multiple PLC link quality values includes:
controlling the power converter to broadcast a search command on a public frequency band, where the search command includes a PLC link quality detection command and a PLC link quality minimum response threshold; and
receiving, by the power converter, broadcast response messages fed back by multiple candidate module controllers to obtain the multiple candidate module controllers and multiple uplink PLC link quality values, where the multiple uplink PLC link quality values refer to PLC link quality values from the multiple initial module controllers to the power converter; the multiple candidate module controllers are part of the multiple initial module controllers whose detected downlink PLC link quality values each are greater than or equal to the PLC link quality minimum response threshold; and the downlink PLC link quality values refer to PLC link quality values from the power converter to the multiple initial module controller.

In an embodiment, the controlling a power converter to search for multiple initial module controllers and obtaining a PLC link quality value between each initial module controller and the power converter, to obtain multiple PLC link quality values includes:
controlling the power converter to broadcast a search command on a public frequency band, where the search command includes a PLC link quality detection command;
receiving, by the power converter, broadcast response messages fed back by multiple module controllers to obtain multiple uplink PLC link quality values, where the multiple uplink PLC link quality values refer to PLC link quality values from the multiple initial module controllers to the power converter; and
determining part of the multiple initial module controllers whose uplink PLC link quality values each are greater than or equal to a PLC link quality minimum response threshold as the multiple candidate module controllers.

In an embodiment, the controlling a power converter to search for multiple initial module controllers and obtaining a PLC link quality value between each initial module controller and the power converter, to obtain multiple PLC link quality values includes:
controlling the power converter to broadcast a search command on a public frequency band, where the search command includes a PLC link quality detection command and a PLC link quality minimum response threshold;
receiving, by the power converter, broadcast response messages fed back by multiple filtered module controllers, to obtain the multiple filtered module controllers and multiple uplink PLC link quality values, where the multiple filtered module controllers are part of the multiple initial module controllers whose detected downlink PLC link quality values each are greater than or equal to the PLC link quality minimum response threshold, the multiple uplink PLC link quality values refer to PLC link quality values from the multiple initial module controllers to the power converter, and the downlink PLC link quality values refer to PLC link quality values from the power converter to the multiple initial module controllers; and
determining part of the multiple filtered module controllers whose uplink PLC link quality values each are greater than or equal to the PLC link quality minimum response threshold as the multiple candidate module controllers.

Furthermore, the power converter shown in FIG. 8 further includes a communication interface 803 and a bus 804. The controller 800, the memory 801, the direct current conversion unit 802, and the communication interface 803 are connected to each other via the bus 804.

The memory 801 may include a high-speed random access memory (RAM) or a non-volatile memory, such as at least one disk memory. The network element of the system communicates with at least one other network element through at least one communication interface 803 (which may be wired or wireless). Internet, wide area network, local network, metropolitan area network and the like may be used. The bus 804 may be an ISA bus, PCI bus, EISA bus or the like. The bus may include an address bus, a data bus, a control bus and the like. For ease of representation, only one bidirectional arrow is shown in FIG. 8 to represent the bus, which does not imply that there is only one bus or one type of bus.

The controller 800 may be an integrated circuit chip with signal processing capabilities. During an implementation, the steps of the method may be performed by using an integrated logic circuit of hardware in the controller 800 or instructions in a software form. The controller 800 may be a general processor such as a central processing unit (CPU), a network processor (NP), a digital signal processor (DSP), an application specific integrated circuit (ASIC), a field-programmable gate array (FPGA) or other programmable logic devices, a discrete gate, a transistor logic device, or a discrete hardware component. The methods, steps and logical block diagrams disclosed in the embodiments of the present disclosure may be implemented or performed. The general processor may be a microprocessor, a conventional processor, or the like. Steps of the method disclosed in combination with the embodiments of the present disclosure may be directly implemented by a hardware decoding processor or implemented by a combination of a hardware module and a software module in the decoding processor. The software module may be in a mature storage medium in the art such as a random access memory, a flash memory, a read-only memory, a programmable read-only memory or an electrically erasable programmable memory, or a register. The storage medium is located in the memory 801, and the controller 800 reads the information in the memory 801 and, in combination with its hardware, performs the steps of the method of the embodiments.

A power system is provided according to an embodiment of the present disclosure. The power system includes multiple module controllers and at least one power converter. Each power converter is connected to at least one photovoltaic string, and each photovoltaic string includes multiple photovoltaic units connected in series. Each of the multiple photovoltaic units includes a photovoltaic module and a module controller connected in series. The photovoltaic module is configured to perform photovoltaic power generation and transmit, through a corresponding module controller, electrical energy to the power converter corresponding to the photovoltaic unit. The power converter is configured to perform the self-networking method for a module controller according to any one of the embodiments.

A computer-readable storage medium is provided according to an embodiment of the present disclosure. The computer-readable storage medium may be a non-volatile computer-readable storage medium or a volatile computer-readable storage medium. The computer-readable storage medium stores an instruction. The instruction, when executed by a computer, causes the computer to perform the self-networking method for the module controller. The self-networking method includes: controlling a power converter to search for multiple initial module controllers and obtaining a PLC link quality value between each of the multiple initial module controllers and the power converter, to obtain multiple PLC link quality values; filtering the multiple initial module controllers based on the multiple PLC link quality values and a minimum quality requirement threshold to obtain multiple candidate module controllers, where each of the multiple candidate module controllers is used to indicate an initial module controller having an actual physical connection with the power converter; and networking the multiple candidate module controllers to obtain multiple networked module controllers.

The networking the multiple candidate module controllers to obtain multiple networked module controllers includes:
activating, by the power converter in response to the power converter meeting a first current identification strategy condition, the multiple candidate module controllers and controlling the power converter to operate in a grid-connected mode, where the first current identification strategy condition is that the power converter does not operate in the grid-connected mode;
after the power converter tracks a maximum power point, filtering out, in response to an output current of a candidate module controller among the multiple candidate module controllers being less than a preset minimum grid-connected current threshold, the candidate module controller with the output current less than the minimum grid-connected current threshold to obtain multiple filtered module controllers; and
networking the multiple filtered module controllers to obtain the multiple networked module controllers.

The networking the multiple candidate module controllers to obtain multiple networked module controllers includes:
filtering out, in response to the power converter meeting a second current identification strategy condition, a candidate module controller with an output current less than a minimum grid-connected current threshold among the multiple candidate module controllers, to obtain multiple filtered module controllers, where the second current identification strategy condition is that an additional module controller is added into the multiple candidate module controllers, or the power converter is operating in a grid-connected mode; and
networking the multiple filtered module controllers to obtain the multiple networked module controllers.

The networking the multiple candidate module controllers to obtain multiple networked module controllers includes: performing current disturbance on the multiple candidate module controllers; determining a Boost port corresponding to each of the multiple candidate module controllers subjected to the current disturbance; and networking the multiple candidate module controllers based on the Boost port corresponding to each of the multiple candidate module controllers, to obtain the multiple networked module controllers.

The performing current disturbance on the multiple candidate module controllers and determining a Boost port corresponding to each of the multiple candidate module controllers subjected to the current disturbance includes:
broadcasting, for each of the multiple candidate module controllers, a gradient tuning instruction to the candidate module controller, where the gradient tuning instruction is used to indicate a Boost port to be raised or lowered at each tuning moment in an tuning moment sequence;
determining a current change of the candidate module controller at each tuning moment; and
determining the Boost port corresponding to the candidate module controller based on the current change of the candidate module controller at each tuning moment.

The networking the multiple candidate module controllers to obtain multiple networked module controllers includes: determining, in response to each Boost port in the power converter being connected to a single photovoltaic string, a PV port corresponding to each of the multiple networked module controllers.

The networking the multiple candidate module controllers to obtain multiple networked module controllers includes:
performing, in response to at least one Boost port of the power converter being connected to multiple photovoltaic strings, pulse blocking on the power converter to obtain a pulse-blocked power converter;
determining, in response to a circulating current being in one of the at least one Boost port of the pulse-blocked power converter, that the Boost port with the circulating current is connected to different photovoltaic strings connected in parallel; and
determining a PV port corresponding to each of the multiple networked module controllers based on a current direction of each of the different photovoltaic strings connected in parallel.

The networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number; and
determining the PV port corresponding to each of the multiple networked module controllers based on a current direction of each of the bypassed multiple photovoltaic strings.

The networking the multiple candidate module controllers to obtain multiple networked module controllers further includes:
obtaining, in response to no circulating current being in Boost ports of the pulse-blocked power converter, at least one serial number corresponding to one of the Boost ports, where the at least one serial number is used to indicate a networked module controller to be bypassed in a photovoltaic string connected to the Boost port;
bypassing the networked module controller indicated by the at least one serial number;
broadcasting, by the power converter, a PV identification command, where the PV identification command is used to indicate a Boost index identifier in which a current is to be changed at each disturbance moment; and
changing a current of each of the Boost ports one by one based on the Boost index identifier;
determining a change of an output current of each of the multiple networked module controllers; and
determining the PV port corresponding to the networked module controller based on the change of the output current.

The bypassing the networked module controller indicated by the at least one serial number includes: determining the networked module controller indicated by the at least one serial number as at least one to-be-bypassed module controller; and transmitting an activation command to an active bypass switching transistor in each of the at least one to-be-bypassed module controller, to activate the at least one to-be-bypassed module controller to achieve active bypass.

After transmitting an activation command to an active bypass switching transistor in each of the at least one to-be-bypassed module controller, the method further includes: determining, in response to an unactivated networked module controller being connected between two activated module controllers, that an active bypass switching transistor in the unactivated networked module controller is in a passive bypass state.

The controlling a power converter to search for multiple initial module controllers and obtaining a PLC link quality value between each initial module controller and the power converter, to obtain multiple PLC link quality values includes:
controlling the power converter to broadcast a search command on a public frequency band, where the search command includes a PLC link quality detection command and a PLC link quality minimum response threshold; and
receiving, by the power converter, broadcast response messages fed back by multiple candidate module controllers to obtain the multiple candidate module controllers and multiple uplink PLC link quality values, where the multiple uplink PLC link quality values refer to PLC link quality values from the multiple initial module controllers to the power converter; the multiple candidate module controllers are part of the multiple initial module controllers whose detected downlink PLC link quality values each are greater than or equal to the PLC link quality minimum response threshold; and the downlink PLC link quality values refer to PLC link quality values from the power converter to the multiple initial module controller.

The controlling a power converter to search for multiple initial module controllers and obtaining a PLC link quality value between each initial module controller and the power converter, to obtain multiple PLC link quality values includes:
controlling the power converter to broadcast a search command on a public frequency band, where the search command includes a PLC link quality detection command;
receiving, by the power converter, broadcast response messages fed back by multiple module controllers to obtain multiple uplink PLC link quality values, where the multiple uplink PLC link quality values refer to PLC link quality values from the multiple initial module controllers to the power converter; and
determining part of the multiple initial module controllers whose uplink PLC link quality values each are greater than or equal to a PLC link quality minimum response threshold as the multiple candidate module controllers.

The controlling a power converter to search for multiple initial module controllers and obtaining a PLC link quality value between each initial module controller and the power converter, to obtain multiple PLC link quality values includes:
controlling the power converter to broadcast a search command on a public frequency band, where the search command includes a PLC link quality detection command and a PLC link quality minimum response threshold;
receiving, by the power converter, broadcast response messages fed back by multiple filtered module controllers, to obtain the multiple filtered module controllers and multiple uplink PLC link quality values, where the multiple filtered module controllers are part of the multiple initial module controllers whose detected downlink PLC link quality values each are greater than or equal to the PLC link quality minimum response threshold, the multiple uplink PLC link quality values refer to PLC link quality values from the multiple initial module controllers to the power converter, and the downlink PLC link quality values refer to PLC link quality values from the power converter to the multiple initial module controllers; and
determining part of the multiple filtered module controllers whose uplink PLC link quality values each are greater than or equal to the PLC link quality minimum response threshold as the multiple candidate module controllers.

Those skilled in the art may clearly understand that, for convenience and brevity of description, for a detailed operation process of the foregoing system, apparatus and unit, reference may be made to a corresponding process in the foregoing embodiments of the method, which is not repeated herein.

In a case that the functions are implemented in a form of a software functional unit and sold or used as an independent product, the functions may be stored in a computer-readable storage medium. Based on such understanding, part of the technical solutions of the embodiments of the present disclosure which are essential or contribute to the conventional technology, or part of the technical solutions may be embodied in a form of a software product. The computer software product is stored in a storage medium and includes several instructions for causing a computer device (such as a personal computer, a server, or a network device) to perform all or part of the method described in the embodiments of the present disclosure. The storage medium described above includes various media capable of storing program codes, such as a USB flash disk, a movable hard disk, a Read Only Memory (ROM), a Random Access Memory (RAM), a magnetic disc or an optical disc.

In the description of the present disclosure, it should be noted that the terms "first", "second" and "third" are only for illustrative purposes, and cannot be understood as indicating or implying relative importance.

Finally, it should be noted that the above embodiments are only specific embodiments of the present disclosure, and are used to illustrate the technical solutions of the present disclosure, rather than to limit the present disclosure. The protection scope of the present disclosure is not limited thereto. Although the present disclosure is described in detail with reference to the foregoing embodiments, those skilled in the art should understand that those familiar with the technical field can make modifications or easily envisage changes to the technical solutions recorded in the foregoing embodiments within the technical scope disclosed in the present disclosure, or can obtain equivalent substitutions of some of the technical features. Such modifications, changes or substitutions do not deviate from the essence of the corresponding technical solutions from the spirit and scope of the technical solutions in the embodiments of the present disclosure, and shall be covered by the protection scope of the present disclosure. Therefore, the protection scope of the present disclosure shall be in accordance with the protection scope of the claims.

## Claims

1. A self-networking method for a module controller, comprising:
controlling a power converter to search for a plurality of initial module controllers, obtaining a power line carrier (PLC) link quality value between each of the plurality of initial module controllers and the power converter , to obtain a plurality of PLC link quality values;
filtering the plurality of initial module controllers based on the plurality of PLC link quality values and a minimum quality requirement threshold to obtain a plurality of candidate module controllers, wherein each of the plurality of candidate module controllers is used to indicate an initial module controller having an actual physical connection with the power converter; and
networking the plurality of candidate module controllers to obtain a plurality of networked module controllers.

2. The self-networking method for a module controller according to claim 1, wherein the networking the plurality of candidate module controllers to obtain a plurality of networked module controllers comprises:
activating, by the power converter in response to the power converter meeting a first current identification strategy condition, the plurality of candidate module controllers and controlling the power converter to operate in a grid-connected mode, wherein the first current identification strategy condition is that the power converter does not operate in the grid-connected mode; after the power converter tracks a maximum power point, filtering out, in response to an output current of a candidate module controller among the plurality of candidate module controllers being less than a preset minimum grid-connected current threshold, the candidate module controller with the output current less than the minimum grid-connected current threshold to obtain a plurality of filtered module controllers; and networking the plurality of filtered module controllers to obtain the plurality of networked module controllers;
filtering out, in response to the power converter meeting a second current identification strategy condition, a candidate module controller with an output current less than a minimum grid-connected current threshold among the plurality of candidate module controllers, to obtain a plurality of filtered module controllers, wherein the second current identification strategy condition is that an additional module controller is added into the plurality of candidate module controllers, or the power converter is operating in a grid-connected mode; and networking the plurality of filtered module controllers to obtain the plurality of networked module controllers; or
performing current disturbance on the plurality of candidate module controllers; determining a Boost port corresponding to each of the plurality of candidate module controllers subjected to the current disturbance; and networking the plurality of candidate module controllers based on the Boost port corresponding to each of the plurality of candidate module controllers, to obtain the plurality of networked module controllers.

3. The self-networking method for a module controller according to claim 2, wherein the performing current disturbance on the plurality of candidate module controllers, and determining the Boost port corresponding to each of the plurality of candidate module controller subjected to the current disturbance comprises:
broadcasting, for each of the plurality of candidate module controllers, a gradient tuning instruction to the candidate module controller, wherein the gradient tuning instruction is used to indicate the Boost port to be raised or lowered at each tuning moment in a tuning moment sequence;
determining a current change of the candidate module controller at each tuning moment; and
determining the Boost port corresponding to the candidate module controller based on the current change of the candidate module controller at each tuning moment.

4. The self-networking method for a module controller according to claim 1, wherein the networking the plurality of candidate module controllers to obtain a plurality of networked module controllers comprises:
determining, in response to each Boost port in the power converter being connected to a single photovoltaic string, a PV port corresponding to each of the plurality of networked module controllers; or
performing, in response to at least one Boost port of the power converter being connected to a plurality of photovoltaic strings, pulse blocking on the power converter to obtain a pulse-blocked power converter; determining, in response to a circulating current being in one of the at least one Boost port of the pulse-blocked power converter, that the Boost port with the circulating current is connected to different photovoltaic strings connected in parallel; and determining a PV port based on a current direction of each of the different photovoltaic strings connected in parallel, to obtain the PV port corresponding to each of the plurality of networked module controllers.

5. The self-networking method for a module controller according to claim 4, wherein the networking the plurality of candidate module controllers to obtain a plurality of networked module controllers further comprises:
obtaining, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypassing the networked module controller indicated by the at least one serial number; and determining the PV port based on a current direction of each of the bypassed plurality of photovoltaic strings, to obtain the PV port corresponding to each of the plurality of networked module controllers; or
obtaining, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypassing the networked module controller indicated by the at least one serial number; broadcasting, by the power converter, a PV identification command, wherein the PV identification command is used to indicate a Boost index identifier in which a current is to be changed at each disturbance moment; changing a current of each of the Boost ports one by one based on the Boost index identifier; determining a change of an output current of each of the plurality of networked module controllers; and determining the PV port corresponding to the networked module controller based on the change of the output current.

6. The self-networking method for the module controller according to claim 1, wherein the controlling a power converter to search for a plurality of initial module controllers and obtaining a PLC link quality value between each of the plurality of initial module controllers and the power converter, to obtain a plurality of PLC link quality values comprises:
controlling the power converter to broadcast a search command on a public frequency band, wherein the search command comprises a PLC link quality detection command and a PLC link quality minimum response threshold; and receiving, by the power converter, broadcast response messages fed back by a plurality of candidate module controllers to obtain the plurality of candidate module controllers and a plurality of uplink PLC link quality values, wherein the plurality of uplink PLC link quality values refer to PLC link quality values from the plurality of initial module controllers to the power converter; the plurality of candidate module controllers are part of the plurality of initial module controllers whose detected downlink PLC link quality values each are greater than or equal to the PLC link quality minimum response threshold; and the downlink PLC link quality values refer to PLC link quality values from the power converter to the plurality of initial module controllers;
controlling the power converter to broadcast a search command on a public frequency band, wherein the search command comprises a PLC link quality detection command; receiving, by the power converter, broadcast response messages fed back by a plurality of module controllers to obtain a plurality of uplink PLC link quality values, wherein the plurality of uplink PLC link quality values refer to PLC link quality values from the plurality of initial module controllers to the power converter; and determining part of the plurality of initial module controllers whose uplink PLC link quality values each are greater than or equal to a PLC link quality minimum response threshold as the plurality of candidate module controllers; or
controlling the power converter to broadcast a search command on a public frequency band, wherein the search command comprises a PLC link quality detection command and a PLC link quality minimum response threshold; receiving, by the power converter, broadcast response messages fed back by a plurality of filtered module controllers, to obtain the plurality of filtered module controllers and a plurality of uplink PLC link quality values, wherein the plurality of filtered module controllers are part of the plurality of initial module controllers whose detected downlink PLC link quality values each are greater than or equal to the PLC link quality minimum response threshold, the plurality of uplink PLC link quality values refer to PLC link quality values from the plurality of initial module controllers to the power converter, and the downlink PLC link quality values refer to PLC link quality values from the power converter to the plurality of initial module controllers; and determining part of the plurality of filtered module controllers whose uplink PLC link quality values each are greater than or equal to the PLC link quality minimum response threshold as the plurality of candidate module controllers.

7. A power converter, comprising:
a direct current conversion unit, configured to convert a direct current power into an alternating current power;
a memory, configured to store an instruction; and
a controller, configured to
search for a plurality of initial module controllers and obtain a power line carrier (PLC) link quality value between each of the plurality of initial module controllers and the power converter, to obtain a plurality of PLC link quality values;
filter the plurality of initial module controllers based on the plurality of PLC link quality values and a minimum quality requirement threshold to obtain a plurality of candidate module controllers, wherein each of the plurality of candidate module controllers is used to indicate an initial module controller having an actual physical connection with the power converter; and
network the plurality of candidate module controllers to obtain a plurality of networked module controllers,
wherein the memory and the controller are connected to each other via lines.

8. The power converter according to claim 7, wherein for networking the plurality of candidate module controllers to obtain a plurality of networked module controllers, the controller is configured to:
activate, by the power converter in response to the power converter meeting a first current identification strategy condition, the plurality of candidate module controllers and control the power converter to operate in a grid-connected mode, wherein the first current identification strategy condition is that the power converter does not operate in the grid-connected mode; after the power converter tracks a maximum power point, filter out, in response to an output current of a candidate module controller among the plurality of candidate module controllers being less than a preset minimum grid-connected current threshold, the candidate module controller with the output current less than the minimum grid-connected current threshold to obtain a plurality of filtered module controllers; and network the plurality of filtered module controllers to obtain the plurality of networked module controllers; or
filter out, in response to the power converter meets a second current identification strategy condition, a candidate module controller with an output current less than a minimum grid-connected current threshold among the plurality of candidate module controllers, to obtain a plurality of filtered module controllers, wherein the second current identification strategy condition is that an additional module controller is added into the plurality of candidate module controllers, or the power converter is operating in a grid-connected mode; and network the plurality of filtered module controllers to obtain the plurality of networked module controllers.

9. The power converter according to claim 7, wherein for networking the plurality of candidate module controllers to obtain a plurality of networked module controllers, the controller is configured to:
perform current disturbance on the plurality of candidate module controllers;
determine a Boost port corresponding to each of the plurality of candidate module controllers subjected to the current disturbance; and
network the plurality of candidate module controllers based on the Boost port corresponding to each of the plurality of candidate module controllers, to obtain the plurality of networked module controllers.

10. The power converter according to claim 9, wherein for performing current disturbance on the plurality of candidate module controllers, and determining the Boost port corresponding to each of the plurality of candidate module controller subjected to the current disturbance, the controller is configured to:
broadcast, for each of the plurality of candidate module controllers, a gradient tuning instruction to the candidate module controller, wherein the gradient tuning instruction is used to indicate the Boost port to be raised or lowered at each tuning moment in a tuning moment sequence;
determine a current change of the candidate module controller at each tuning moment; and
determine the Boost port corresponding to the candidate module controller based on the current change of the candidate module controller at each tuning moment.

11. The power converter according to claim 7, wherein for networking the plurality of candidate module controllers to obtain a plurality of networked module controllers, the controller is configured to:
determine, in response to each Boost port in the power converter being connected to a single photovoltaic string, the PV port corresponding to each of the plurality of networked module controller; or
perform, in response to at least one Boost port of the power converter being connected to a plurality of photovoltaic strings, pulse blocking on the power converter to obtain a pulse-blocked power converter; determine, in response to a circulating current being in one of the at least one Boost port of the pulse-blocked power converter, that the Boost port with the circulating current is connected to different photovoltaic strings connected in parallel; and determine a PV port based on a current direction of each of the different photovoltaic strings connected in parallel, to obtain the PV port corresponding to each of the plurality of networked module controllers.

12. The power converter according to claim 11, wherein for networking the plurality of candidate module controllers to obtain a plurality of networked module controllers, the controller is configured to:
obtain, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypass the networked module controller indicated by the at least one serial number; and determine PV port based on a current direction of each of the bypassed plurality of photovoltaic strings, to obtain the PV port corresponding to each of the plurality of networked module controllers; or
obtain, in response to no circulating current being in Boost ports of the pulse-blocked power converter, at least one serial number corresponding to one of the Boost ports, wherein the at least one serial number is used to indicate a networked module controller to be bypassed in a photovoltaic string connected to the Boost port; bypass the networked module controller indicated by the at least one serial number; broadcast, by the power converter, a PV identification command, wherein the PV identification command is used to indicate a Boost index identifier in which a current is to be changed at each disturbance moment; change a current of each of the Boost ports one by one based on the Boost index identifier; determine a change of an output current of each of the plurality of networked module controllers; and determine the PV port corresponding to the networked module controller based on the change of the output current..

13. The power converter according to claim 12, wherein for bypassing the networked module controller indicated by the at least one serial number, the controller is further configured to:
determine the networked module controller indicated by the at least one serial number as at least one to-be-bypassed module controller; and
transmit an activation command to an active bypass switching transistor in each of the at least one to-be-bypassed module controller, to activate the at least one to-be-bypassed module controller to achieve active bypass.

14. The power converter according to claim 13, wherein after transmitting an activation command to an active bypass switching transistor in each of the at least one to-be-bypassed module controller, the controller is further configured to:
determine, in response to an unactivated networked module controller being connected between two activated module controllers, that an active bypass switching transistor in the unactivated networked module controller is in a passive bypass state.

15. The power converter according to claim 7, wherein for controlling a power converter to search for a plurality of initial module controllers and obtaining a PLC link quality value between each of the plurality of initial module controllers and the power converter, to obtain a plurality of PLC link quality values, the controller is further configured to:
control the power converter to broadcast a search command on a public frequency band, wherein the search command comprises a PLC link quality detection command and a PLC link quality minimum response threshold; and receive, by the power converter, broadcast response messages fed back by a plurality of candidate module controllers to obtain the plurality of candidate module controllers and a plurality of uplink PLC link quality values, wherein the plurality of uplink PLC link quality values refer to PLC link quality values from the plurality of initial module controllers to the power converter; the plurality of candidate module controllers are part of the plurality of initial module controllers whose detected downlink PLC link quality values each are greater than or equal to the PLC link quality minimum response threshold; and the downlink PLC link quality values refer to PLC link quality values from the power converter to the plurality of initial module controller;
control the power converter to broadcast a search command on a public frequency band, wherein the search command comprises a PLC link quality detection command; receive, by the power converter, broadcast response messages fed back by a plurality of module controllers to obtain a plurality of uplink PLC link quality values, wherein the plurality of uplink PLC link quality values refer to PLC link quality values from the plurality of initial module controllers to the power converter; and determine part of the plurality of initial module controllers whose uplink PLC link quality values each are greater than or equal to a PLC link quality minimum response threshold as the plurality of candidate module controllers; or
control the power converter to broadcast a search command on a public frequency band, wherein the search command comprises a PLC link quality detection command and a PLC link quality minimum response threshold; receive, by the power converter, broadcast response messages fed back by a plurality of filtered module controllers, to obtain the plurality of filtered module controllers and a plurality of uplink PLC link quality values, wherein the plurality of filtered module controllers are part of the plurality of initial module controllers whose detected downlink PLC link quality values each are greater than or equal to the PLC link quality minimum response threshold, the plurality of uplink PLC link quality values refer to PLC link quality values from the plurality of initial module controllers to the power converter, and the downlink PLC link quality values refer to PLC link quality values from the power converter to the plurality of initial module controllers; and determine part of the plurality of filtered module controllers whose uplink PLC link quality values each are greater than or equal to the PLC link quality minimum response threshold as the plurality of candidate module controllers.
